(19) Europäisches Patentamt
European Patent Office
Office européen des brevets

(11) **EP 4 362 404 A1**

(12) **EUROPEAN PATENT APPLICATION**
published in accordance with Art. 153(4) EPC

(43) Date of publication:
**01.05.2024 Bulletin 2024/18**

(21) Application number: **21946361.9**

(22) Date of filing: **22.06.2021**

(51) International Patent Classification (IPC):
**H04L 25/02** *(2006.01)*

(52) Cooperative Patent Classification (CPC):
**H04L 25/02**

(86) International application number:
**PCT/CN2021/101641**

(87) International publication number:
**WO 2022/266859 (29.12.2022 Gazette 2022/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Beijing Xiaomi Mobile Software Co., Ltd.
Beijing 100085 (CN)**
• **Beijing University of Posts and
Telecommunications
Beijing 100876 (CN)**

(72) Inventors:
• **MU, Qin
Beijing 100085 (CN)**
• **HONG, Wei
Beijing 100085 (CN)**
• **ZHAO, Zhongyuan
Beijing 100876 (CN)**
• **CHENG, Wentao
Beijing 100876 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **CHANNEL ESTIMATION METHOD, CHANNEL ESTIMATION APPARATUS, AND STORAGE MEDIUM**

(57)    The present disclosure relates to a channel estimation method, a channel estimation apparatus, and a storage medinn1. The channel estimation method comprises: determining a channel estimation neural network model corresponding to a signal to interference plus noise ratio (SINR), and determining a first channel response estimation value of a channel; inputting the first channel response estimation value into the channel estimation neural network model to obtain a second channel response estimation value of the channel; and determining the second channel response estimation value as an estimation value of the channel. According to the present disclosure, the channel may be estimated by means of the channel estimation neural network model, thereby improving the estimation accuracy of the wireless channel.

```
                                                          S11
determining a channel estimation neural network model
corresponding to an SINR, and determining a first channel
response estimation value of a channel

                                                          S12
obtaining a second channel response estimation value of the
channel by inputting the first channel response estimation
value into the channel estimation neural network model

                                                          S13
determining the second channel response estimation value as
an estimation value of the channel
```

FIG. 4

**Description**

**TECHNICAL FIELD**

The present disclosure relates to a field of wireless communication technologies, in particularly, to a method and an apparatus for a channel estimation, and a storage medium.

**BACKGROUND**

In a MIMO (multiple-input multiple-output)-OFDM (orthogonal frequency division multiplexing) system, a channel estimation may be performed by using a linear estimation method for solving a minimum mean square error, to achieve an accurate and low computation overhead channel estimation.

However, a fading channel contains various nonlinear features therein. These nonlinear features make it difficult to perform the channel estimation through the linear estimation method.

**SUMMARY**

To overcome the problems existing in the related art, a method and an apparatus for a channel estimation, and a storage medium are provided in the present disclosure.

According to a first aspect of embodiments of the present disclosure, a method for a channel estimation is provided. The method includes:
determining a channel estimation neural network model corresponding to a signal to interference plus noise ratio (SINR), and determining a first channel response estimation value of a channel; obtaining a second channel response estimation value of the channel by inputting the first channel response estimation value into the channel estimation neural network model; and determining the second channel response estimation value as an estimation value of the channel.

In an implementation, determining the channel estimation neural network model corresponding to the signal to interference plus noise ratio (SINR) includes:
determining a correspondence between SINR intervals and channel estimation neural network models, and determining an SINR interval where the SINR is located; determining a channel estimation neural network model corresponding to the SINR interval where the SINR is located based on the correspondence.

In an implementation, determining the correspondence between SINR intervals and channel estimation neural network models includes:
determining an SINR scale, and determining a first number of SINR intervals based on the scale; collecting channel response estimation data for each SINR interval in the first number of SINR intervals, to obtain a first number of channel response estimation value training datasets; training a neural network model, based on the first number of channel response estimation value training datasets, to obtain a first number of channel estimation neural network models.

In an implementation, training the neural network model, based on the first number of channel response estimation value training datasets, to obtain the first number of channel estimation neural network models includes:
collecting a real part training dataset and an imaginary part training dataset for each SINR interval in the first number of SINR intervals; determining a first channel real part training dataset based on the real part training dataset, and determining a label corresponding to the first channel real part training dataset; determining a first channel imaginary part training dataset based on the imaginary part training dataset, and determining a label corresponding to the first channel imaginary part training dataset; and training the neural network model by taking combination data of the first channel real part training dataset and the corresponding label, as well as the first channel imaginary part training dataset and the corresponding label for each of the first number of SINR intervals as an input of the neural network model, to obtain the first number of channel estimation neural network models.

In an implementation, the neural network model includes a denoising convolution neural network (DNCNN) and a super resolution convolution neural network (SRCNN);
training the neural network model by taking the combination data of the first channel real part training dataset and the corresponding label, as well as the first channel imaginary part training dataset and the corresponding label for each of the first number of SINR intervals as the input of the neural network model, to obtain the first number of channel estimation neural network models includes:
obtaining training combination data by combining the first channel real part training dataset and the corresponding label, as well as the first channel imaginary part training dataset and the corresponding label for each of the first number of SINR intervals; training the DNCNN and the SRCNN by taking the training combination data as inputs of the DNCNN and the SRCNN in the neural network model respectively, to obtain a first number of trained DNCNN models and a first number of trained SRCNN models; and obtaining the first number of channel estimation neural network models after combining the first number of DNCNN models and the first number of SRCNN models correspondingly.

In an implementation, determining the first channel response estimation value of the channel includes: determining a channel response estimation value at a position where a demodulation reference signal (DMRS) is located in the channel; separating a real part and an imaginary part of the channel response estimation value, and performing interpolation processing on the real part and the imaginary part respectively, to obtain a first channel real part and a first channel imaginary part; and determining a complex number obtained based on a combination of the first channel real part and the first channel imaginary part as the first channel response estimation value.

In an implementation, obtaining the second channel response estimation value of the channel by inputting the first channel response estimation value into the channel estimation neural network model includes: obtaining a second channel real part and a second channel imaginary part by inputting a first channel real part and a first channel imaginary part of the first channel response estimation value into the channel estimation neural network model respectively; and determining a complex number of a combination of the second channel real part and the second channel imaginary part as the second channel response estimation value.

According to a second aspect of embodiments of the present disclosure, an apparatus for a channel estimation is provided. The apparatus includes:

a determination module, configured to determine a channel estimation neural network model corresponding to a signal to interference plus noise ratio (SINR), and determine a first channel response estimation value of a channel; an estimation module, configured to obtain a second channel response estimation value of the channel by inputting the first channel response estimation value into the channel estimation neural network model. The determination module is configured to determine the second channel response estimation value as an estimation value of the channel.

In an implementation, the determination module is configured to: determine a correspondence between SINR intervals and channel estimation neural network models, and determining an SINR interval where the SINR is located; determine a channel estimation neural network model corresponding to the SINR interval where the SINR is located based on the correspondence.

In an implementation, the determination module is configured to: determine an SINR scale, and determine a first number of SINR intervals based on the scale; collect channel response estimation data for each SINR interval in the first number of SINR intervals, to obtain a first number of channel response estimation value training datasets; train a neural network model, based on the first number of channel response estimation value training datasets, to obtain a first number of channel estimation neural network models.

In an implementation, the determination module is configured to:

collect a real part training dataset and an imaginary part training dataset for each SINR interval in the first number of SINR intervals; determine a first channel real part training dataset based on the real part training dataset, and determine a label corresponding to the first channel real part training dataset; determine a first channel imaginary part training dataset based on the imaginary part training data set, and determine a label corresponding to the first channel imaginary part training dataset; and train the neural network model by taking combination data of the first channel real part training dataset and the corresponding label, as well as the first channel imaginary part training dataset and the corresponding label for each of the first number of SINR intervals as an input of the neural network model, to obtain the first number of channel estimation neural network models.

In an implementation, the neural network model includes a denoising convolution neural network (DNCNN) and a super resolution convolution neural network (SRCNN);

the determination module is configured to:

obtain training combination data by combining the first channel real part training dataset and the corresponding label, as well as the first channel imaginary part training dataset and the corresponding label for each of the first number of SINR intervals; train the DNCNN and the SRCNN by taking the training combination data as inputs of the DNCNN and the SRCNN in the neural network model respectively, to obtain a first number of trained DNCNN models and a first number of trained SRCNN models; and obtain the first number of channel estimation neural network models after combining the first number of DNCNN models and the first number of SRCNN models correspondingly.

In an implementation, the determination module is configured to: determine a channel response estimation value at a position where a demodulation reference signal (DMRS) is located in the channel; separate a real part and an imaginary part of the channel response estimation value, and perform interpolation processing on the real part and the imaginary part respectively, to obtain a first channel real part and a first channel imaginary part; and determine a complex number obtained based on a combination of the first channel real part and the first channel imaginary part as the first channel response estimation value.

In an implementation, the determination module is configured to: obtain a second channel real part and a second channel imaginary part by inputting a first channel real part and a first channel imaginary part of the first channel response estimation value into the channel estimation neural network model respectively; and determine a complex number of a combination of the second channel real part and the second channel imaginary part as the second channel response estimation value.

According to a third aspect of embodiments of present disclosure, a device for a channel estimation is provided. The device includes:

a processor; and a memory for storing instructions executable by the processor; in which, the processor is configured to perform the method for the channel estimation in the first aspect or in any one implementation of the first aspect.

According to a fourth aspect of embodiments of the present disclosure, a non-transitory computer-readable storage medium is provided. When instructions in the storage medium are executed by a processor of a mobile terminal, the mobile terminal is caused to perform the method for the channel estimation in the first aspect or any implementation of the first aspect.

The technical solution provided in embodiments of the present disclosure may include the following beneficial effect. The channel estimation neural network model for the channel estimation is determined based on the determined SINR. The channel estimation is performed based on the channel estimation neural network model and the first channel response estimation value of the channel, to determine the channel estimation value. Therefore, with performing estimation for the channel through the channel estimation neural network model, an accuracy of the wireless channel estimation may be improved and a computation complexity during an estimation process may be reduced, which may enhance a channel capacity of a MIMO-OFDM system and achieve a greater performance gain.

It should be noted that, the details above and in the following are exemplary and illustrative, and do not constitute the limitation on the present disclosure.

## BRIEF DESCRIPTION OF THE DRAWINGS

The drawings herein are incorporated into the specification and constitute a part of the specification, show embodiments in conformity with embodiments of the present disclosure, and explain the principle of the present disclosure together with the specification.

FIG. 1 is a schematic diagram illustrating a system of communication between a network device and a terminal according to an exemplary embodiment.

FIG. 2 is a schematic diagram illustrating a frame structure of single symbol DMRS and CSI-RS in a 5G NR protocol of a method for a channel estimation according to an exemplary embodiment.

FIG. 3 is a block diagram illustrating a system for a method for a channel estimation according to an exemplary embodiment.

FIG. 4 is a flowchart illustrating a method for a channel estimation according to an exemplary embodiment.

FIG. 5 is a flowchart illustrating a method of estimating a wireless channel based on deep learning in a method for a channel estimation according to an exemplary embodiment.

FIG. 6 is a flowchart illustrating a method for a channel estimation according to an exemplary embodiment.

FIG. 7 is a flowchart illustrating a method of determining a neural network model in a method for a channel estimation according to an exemplary embodiment.

FIG. 8 is a flowchart illustrating a method for a channel estimation according to an exemplary embodiment.

FIG. 9 is a flowchart illustrating a method for a channel estimation according to an exemplary embodiment.

FIG. 10 is a flowchart illustrating a method for a channel estimation according to an exemplary embodiment.

FIG. 11 is a schematic diagram illustrating a specific structure of a neural network model in a method for a channel estimation according to an exemplary embodiment.

FIG. 12 is a flowchart illustrating a method for a channel estimation according to an exemplary embodiment.

FIG. 13 is a flowchart illustrating a method for a channel estimation according to an exemplary embodiment.

FIG. 14 is a block diagram illustrating an apparatus for a channel estimation according to an exemplary embodiment.

FIG. 15 is a block diagram illustrating a device for a channel estimation according to an exemplary embodiment.

FIG. 16 is a block diagram illustrating a device for a channel estimation according to an exemplary embodiment.

## DETAILED DESCRIPTION

The exemplary embodiments will be described in detail here, and examples thereof are shown in the accompanying drawings. When the following descriptions refer to the accompanying drawings, same numbers in different drawings represent same or similar elements unless otherwise indicated. The implementations described in the following exemplary embodiments do not represent all implementations consistent with the present disclosure. Rather, they are merely examples of apparatuses and methods consistent with some aspects of the disclosure as detailed in the appended claims.

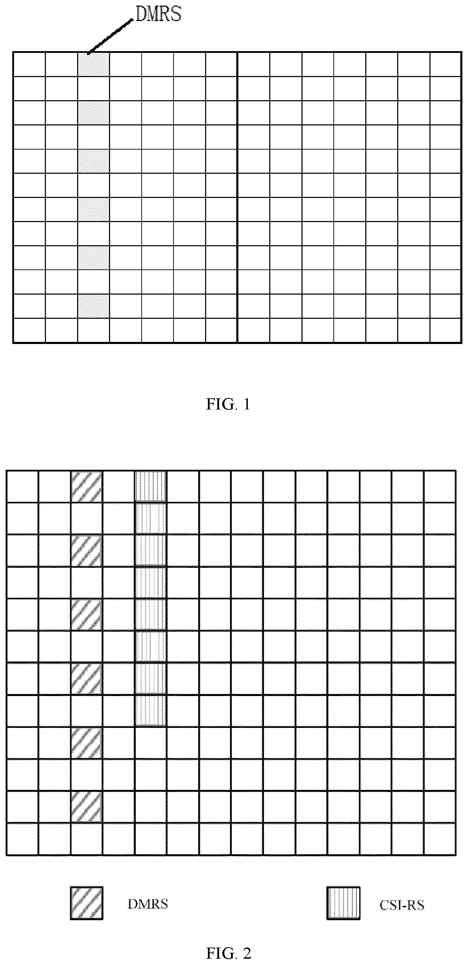

FIG. 1 is a schematic diagram illustrating a system of communication between a network device and a terminal according to an exemplary embodiment. The communication method provided in the present disclosure may be applied in a communication system as illustrated in the architecture diagram of FIG. 1. As illustrated in FIG. 1, a network side device may send a signaling based on the architecture illustrated in FIG. 1.

In an MIMO system, a channel estimation may be performed by using a linear estimation method for solving a minimum mean square error, to achieve an accurate and low computation overhead channel estimation. Based on mathematical principles, after obtaining an initial estimation of a channel, changes in the channel may be tracked by discrete pilots distributed on time-frequency domain grids of orthogonal frequency division multiplexing. A rectangular pilot pattern is a generally used pilot layout pattern.

In accordance with description for a frame structure in an NR protocol, a transmission frame with the following parameter configuration method is selected as an example for channel estimation. Each physical resource block (PRB) contains 12 subcarriers with an interval of 15kHz. One subframe with a duration of 1ms includes one slot, and one slot includes 14 OFDM symbols. Each OFDM symbol is prefixed with a cyclic prefix. An upper level parameter mapping category is selected as category A, a reference signal configuration category is selected as category 1, and a demodulation reference signal (DMRS) uses a single symbol without using additional DMRS symbols. FIG. 1 is a diagram illustrating a category 1, single symbol DMRS configuration according to an exemplary embodiment. As illustrated in FIG. 1, a DMRS configuration diagram in one PRB is shown.

Assuming performing a channel estimation for N PRBs, N PRBs has K DMRS symbols. Firstly, channel response estimation values $H_{LS}$ at K DMRS positions are obtained by using an LS estimation method. The channel response estimation values at K DMRS positions are arranged as a column vector $p$ with a dimension $K \times 1$. Secondly, for a channel response estimation value $h_{n,j}$ at any point on the time-frequency domain grids of orthogonal frequency division multiplexing, where n denotes a time-domain OFDM symbol index and j denotes a frequency domain subcarrier index, a linear minimum mean square error estimation value at the point are obtained as follows by using a linear minimum mean square error (LMMSE) estimation method.

$$h_{n,j}^{LMMSE} = r_{hp} R_{pp}^{-1} p$$

where,

$$r_{hp} = E\{h_{n,j} p^H\}$$

$$R_{pp} = E\{pp^H\}.$$

However, for the channel estimation in the foregoing embodiment, an estimation method based on discrete pilots depends on statistical characteristics of channels and emission data powers. For each transmission frame, a channel response estimated based on the overall characteristics always has a significant offset from an actual channel. Moreover, a two-dimensional Wiener filtering method is used when performing a full time-frequency domain grid channel interpolation by using the channel estimation values at discrete pilots, the two-dimensional Wiener filtering method has complex computation, and a complexity of which may increase as a symbol number K of the used DMRS increases.

Deep learning is a frontier field of artificial intelligence, and a network architecture proposed in this subject is adept at handling a fitting problem of nonlinear functions. The deep learning has shown excellent performance in general computer fields, in particularly, an image processing field, where results obtained by using a neural network architecture often surpass existing algorithms. The time-frequency domain channel structure of the MIMO-OFDM system is very similar to an image. It is explored that a wireless channel is estimated by using the deep learning, to obtain an estimation method with higher accuracy and lower computation complexity, thereby further improving a transmission performance of the MIMO-OFDM system. Therefore, the present disclosure provides a method for a channel estimation, which performs an estimation on a channel based on a deep learning neural network model, thus improving an accuracy of estimating the wireless channel, and reducing the computation complexity during the estimation process, further enhancing a channel capacity of the MIMO-OFDM system and achieving a greater performance gain.

Based on the method for the channel estimation provided in the disclosure, the apparatus for the channel estimation according to the disclosure includes a transmitter and a receiver. The transmitter is configured with a reference signal DMRS and a channel state information reference signal (CSI-RS) during signal processing at a physical layer. The transmitter sends a signal after the signal processing is completed. The receiver obtains a received signal and a signal to interference plus noise ratio (SINR) of a current propagation environment is calculated based on the CSI-RS in the received signal. A signal processing module in the receiver is configured with a signal to interference plus noise ratio scale. The scale is divided into several intervals based on a dB value. Each interval has a corresponding neural network model. The calculated SINR falls in a certain interval, and a neural network model corresponding to the interval is used to estimate the channel.

A density of estimating the channel based on the neural network is in a PRB unit. Taking estimation of channel responses for K PRBs as an example, first DMRSs in the K PRBs are obtained and the DMRSs are processed to obtain channel response estimation values at the DMRSs. A real part and an imaginary part of the channel response estimation value at each of the DMRSs are separated, and a two-dimensional interpolation is performed on the real part and the imaginary part respectively. During the interpolation process, it is not necessary to change a time-frequency domain position of the channel response estimation value at the DMRS. The real part and the imaginary part of the channel response estimation value at the DMRS obtained after performing the two-dimensional interpolation is a real part and an imaginary part of a roughly channel response estimation value. A real part and an imaginary part of an accurate channel response estimation value are obtained after the real part and the imaginary part of the roughly channel response estimation value pass a selected neural network model respectively. The accurate channel response estimation value is recombined, and the channel estimation for the K PRBs is completed.

With intervals divided based on the signal to interference plus noise ratio scale configured in the signal processing module of the receiver, one signal to interference plus noise ratio point is selected from each interval. Data collection begins when a signal to interference plus noise ratio of a simulation or real environment is at the point. The collected data includes channel response estimation values at DMRSs in the K PRBs and ideal channel response estimation values of the K PRBs. Data is collected at the signal to interference plus noise ratio point selected from each interval, to organize into an independent dataset. Each dataset is preprocessed to obtain a training dataset for training the neural network models. One neural network model may be obtained by training based on each training dataset.

It may be further understood that a wireless communication system in embodiments of the present disclosure is a network that provides a wireless communication function. The wireless communication system may adopt different communication technologies, for example, code division multiple access (CDMA), wideband code division multiple access (WCDMA), time division multiple access (TDMA), frequency division multiple access (FDMA), orthogonal frequency-division multiple access (OFDMA), single Carrier FDMA (SC-FDMA) and carrier sense multiple access with collision avoidance. The networks may be classified into a 2G (generation) network, a 3G network, a 4G network or a future evolution network, such as, a 5G network, also referred to as a new radio (NR) network, based on capacities, rates, latencies and other factors of different networks. Sometimes, the wireless communication network is simply referred to as a network in the disclosure in order to facilitate the description.

Further, a network device in the present disclosure may also be referred to as a wireless access network device. The wireless access network device may be an access point (AP), a wireless relay node, a wireless backhaul node, a transmission point (TP), or a transmission and reception point (TRP), etc., in a base station, an evolved node B (a base station), a home base station and a wireless fidelity (Wi-Fi) system, or may also be a gNB in an NR system, or may also be a component or a part of devices for constituting a base station. The network device further may be a vehicle-mounted device in an Internet of Vehicles (V2X) communication system. It should be understood that a specific technology and a specific device form adopted by the network device are not limited in embodiments of the present disclosure.

Further, a terminal in the present disclosure further may be referred to as a terminal device, a user equipment (UE), a mobile station (MS), a mobile terminal (MT), etc., which is a device that provides voice and/or data connectivity to a user. For example, the terminal may be a handheld device or a vehicle-mounted device, etc. with a wireless connection function. At present, some terminals may be, for example, a mobile phone, a pocket personal computer (PPC), a palm computer, a personal digital assistant (PDA), a notebook computer, a tablet computer, a wearable device, or a vehicle-mounted device. In addition, the terminal device further may be a vehicle-mounted device in an Internet of Vehicles (V2X) communication system. It should be understood that a specific technology and a specific device form adopted by the terminal are not limited in embodiments of the present disclosure.

In a case that a transmission bandwidth is 20MHz, there are a total of 100 PRBs. Each PRB occupies 12 subcarriers in a frequency domain and one complete slot in a time domain. The subcarriers have an interval of 15kHz, one subframe with a duration of 1ms includes one slot, and one slot includes 14 OFDM symbols. An upper level parameter mapping category is selected as category A, a DMRS reference signal configuration category is selected as category 1, and a (DMRS uses a single symbol without using additional DMRS symbols. An upper level parameter CSI-RS Row is set as 6, and a CSI-RS uses a configuration manner of FD-CDM2 category. Without using hybrid beamforming, a channel between a transmitter layer and each reception antenna port is estimated, a number of PRBs of a single channel estimation is K. FIG. 2 is a schematic diagram illustrating a frame structure of single symbol DMRS and CSI-RS in a 5G NR protocol of a method for a channel estimation according to an exemplary embodiment. Resource particles occupied by each reference signal in a single PRB may be referred to in FIG. 2.

In an embodiment of the present disclosure, a system for which a method for a channel estimation is applicable includes a transmitter and a receiver. The transmitter may be a terminal and the receiver may be a network device; alternatively, the transmitter may be the network device and the receiver may be the terminal. Embodiments of the present disclosure do not make specific limitations on the transmitter and receiver devices herein.

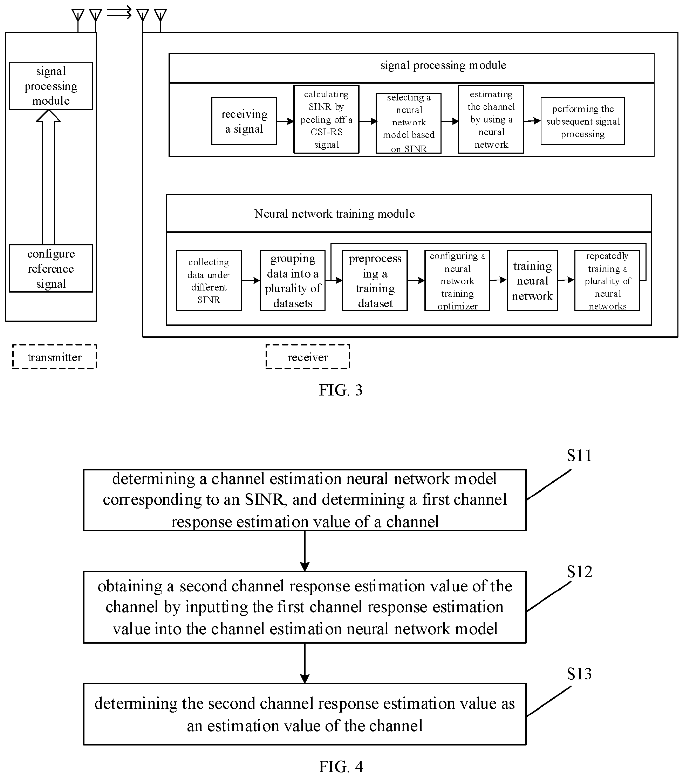

FIG. 3 is a block diagram illustrating a system for a method for a channel estimation according to an exemplary embodiment. As illustrated in FIG. 3, the system is mainly divided into two parts of a transmitter and a receiver. A communication process between the transmitter and the receiver follows an NR protocol, but neither receiver nor transmitter uses hybrid beamforming. The transmitter is responsible for generating and sending data, and completing all signal processing processes before transmitting the data.

The receiver is divided into two parts. A first part is a signal processing module, which is required to calculate the signal to interference plus noise ratio (SINR) of a current environment based on a CSI-RS. A neural network model suitable for the current propagation environment is selected based on the SINR to estimate the channel. Different models represent that the models are obtained by training based on different datasets. For example, estimation performances of neural networks trained in different signal to interference plus noise ratios are not completely same. A neural network trained in an environment with a high signal to interference plus noise ratio has a better estimation performance when a reception signal to interference plus noise ratio is higher, and vice versa.

A second part is a neural network training module, which is responsible for training the neural network. A manner of training is supervised learning. For a time-frequency domain structure of an MIMO-OFDM channel, taking estimation of channel responses for K PRBs as an example, an entire time-frequency domain structure is mathematically equivalent to a complex matrix. After separating real parts and imaginary parts of elements of the matrix, two real matrixes with an unchanged dimension may be obtained. After the receiver obtains the channel response estimation values at the DMRSs, channel response estimation values at DMRSs of other time-frequency positions are estimated based on a neural network model. Taking the estimation of channel responses for K PRBs as an example, the entire time-frequency domain structure is mathematically equivalent to a complex matrix. After separating real parts and imaginary parts of elements of the matrix, two real matrixes with an unchanged dimension may be obtained. Each real matrix can be approximated as an "image". After the receiver obtains the channel response estimation values at the DMRSs, it is equivalent to knowing some pixels of these two "images". Certainly, pixels in most of the remaining positions of these two images are still unknown, and these known pixels may not be accurate either. But at this case, a problem of channel estimation is transformed into how to restore an "image" with a low resolution and incomplete pixels to a clear "image" with a high resolution and complete pixels. By using this method, training and learning may refer to a related image processing technology.

FIG. 4 is a flowchart illustrating a method for a channel estimation according to an exemplary embodiment. As illustrated in FIG. 4, the method for the channel estimation includes the following steps S11 to S13.

At step S11, a channel estimation neural network model corresponding to an SINR is determined, and a first channel response estimation value of a channel is determined.

In an embodiment of the present disclosure, the receiver obtains, based on a received reference signal CSI-RS, the signal to interference plus noise ratio SINR of the reference signal through calculation. The channel estimation neural network model corresponding to the SINR is determined based on the calculated SINR. A channel response estimation value at a DMRS position is determined based on a received DMRS. A rough channel response estimation value is determined by using two-dimensional interpolation based on the channel response estimation value at the DMRS position. For purpose of distinguishing, the rough channel response estimation value is referred to as the first channel response estimation value of the channel.

At step S12, a second channel response estimation value of the channel is obtained by inputting the first channel response estimation value into the channel estimation neural network model.

In an embodiment of the present disclosure, the first channel response estimation value is input into a determined channel estimation neural network model to obtain an accurate channel response estimation value. For purpose of differentiation, the accurate channel response estimation value output based on the channel estimation neural network model is referred to as the second channel response estimation value of the channel.

At step S13, the second channel response estimation value is determined as an estimation value of the channel.

In an embodiment of the present disclosure, the accurate channel response estimation value output by the channel estimation neural network model, that is, the second channel response estimation value may be determined as the estimation value of the channel.

With the method for the channel estimation provided in an embodiment of the present disclosure, the rough channel response estimation value of the channel may be determined by the channel response estimation value at the channel DMRS, and then the rough channel estimation response value may be determined by the channel estimation neural network model to obtain the accurate channel estimation response value, thus achieving estimation for the channel. Therefore, with performing the estimation for the channel through the channel estimation neural network model, an accuracy of the wireless channel estimation may be improved and a computation complexity during an estimation process may be reduced, which may enhance a channel capacity of a MIMO-OFDM system and achieve a greater performance gain.

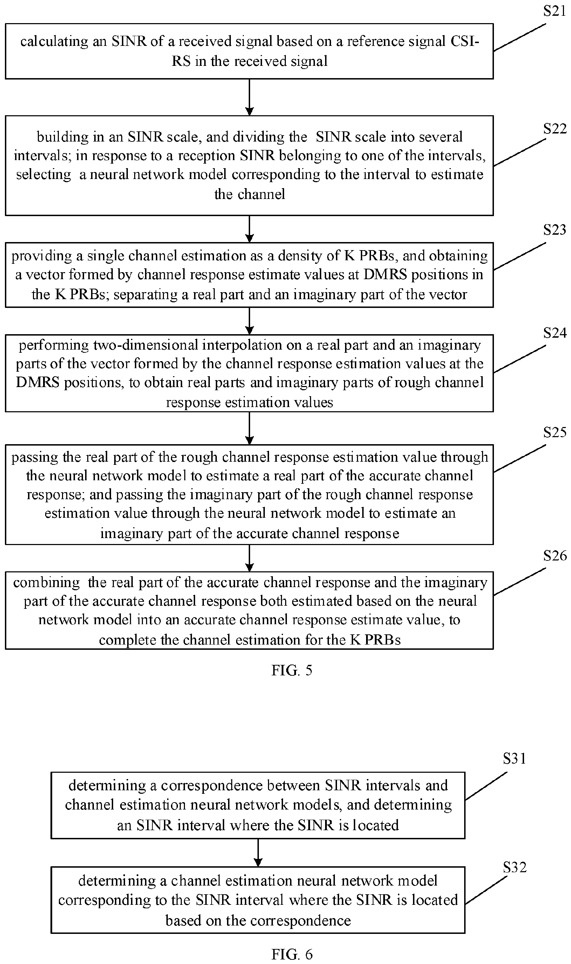

FIG. 5 is a flowchart illustrating a method of estimating a wireless channel based on deep learning in a method for a channel estimation according to an exemplary embodiment. As illustrated in FIG. 5, the method includes the following steps.

At step S21, a signal to interference plus noise ratio (SINR) of a received signal is calculated based on a reference signal CSI-RS in the received signal.

At step S22, a signal to interference plus noise ratio scale is built-in and divided into several intervals. In response to a reception signal to interference plus noise ratio (SINR) belonging to one of the intervals, a neural network model corresponding to the interval is selected to estimate the channel.

In some possible embodiments, the step 22 may include sub steps S221 and S222.

At sub step S221, the receiver is configured with a SINR scale table S, which is divided into n intervals Si based on a dB value of the SINR, where i=1, 2, ..., n. Each SINR interval Si has one neural network model Mi corresponding to the SINR interval Si, where i=1, 2, ..., n.

At sub step S222, it is determined which of the n intervals the SINR value of the received signal belongs to, based on the SINR value of the received signal. After determining the interval, the neural network model corresponding to the interval is selected to estimate the channel.

At step S23, a single channel estimation has a density of K PRBs, and a vector formed by channel response estimate values at DMRS positions in the K PRBs is obtained. A real part and an imaginary part of the vector are separated.

In some possible embodiments, the step S23 may include sub steps S231 and S232.

At sub step S231, the channel response estimation values at all DMRS positions in the K PRBs are obtained to construct a vector p.

At sub step S232, a real part and an imaginary part of the vector p are separated to obtain p-re and p-im, respectively.

At step S24, two-dimensional interpolation is performed on a real part and an imaginary parts of the vector formed by the channel response estimation values at the DMRS positions, to obtain real parts and imaginary parts of rough channel response estimation values.

In some possible embodiments, the step S24 may include sub steps S241 and S242:

At sub step 241, the two-dimensional interpolation is performed on the real part p-re of the vector p to obtain a real part h-re of the rough channel response estimation value.

At sub step 242, the two-dimensional interpolation is performed on the imaginary part p-im of the vector p to obtain an imaginary part h-im of the rough channel response estimation value.

At step S25, the real part of the rough channel response estimation value is passed through the neural network model to estimate a real part of the accurate channel response. The imaginary part of the rough channel response estimation value is passed through the neural network model to estimate an imaginary part of the accurate channel response.

In some possible embodiments, the step S25 may include sub steps S251 to S253.

At sub step S251, assuming that the signal to interference plus noise ratio (SINR) of the received signal belongs to the interval Si, the neural network model Mi is selected to estimate the channel.

At sub step S252, a real part H-re of the estimated accurate channel response value is obtained by passing h-ret through the neural network model Mi.

At sub step S253, an imaginary part H-im of the estimated accurate channel response value is obtained by passing h-im through the neural network model Mi.

At step S26, the real part of the accurate channel response and the imaginary part of the accurate channel response both estimated based on the neural network model are combined into an accurate channel response estimate value, to complete the channel estimation for the K PRBs.

In some possible embodiments, the step S26 may include sub step S261.

At sub step S261, H-re and H-im are combined into: H=H-re+H-im×j. H is the accurate channel response estimation value.

In an embodiment of the present disclosure, the channel estimation can be completed through the above steps, and the following embodiments will further explain steps in the above implementation in combination with the accompanying drawings.

FIG. 6 is a flowchart illustrating a method for a channel estimation according to an exemplary embodiment. As illustrated in FIG. 6, the method for the channel estimation includes the following steps S31 to S32.

At step S31, a correspondence between SINR intervals and channel estimation neural network models is determined. An SINR interval where the SINR is located is determined.

At step S32, a channel estimation neural network model corresponding to the SINR interval where the SINR is located is determined based on the correspondence.

In an embodiment of the present disclosure, an SINR scale may be determined, and the first number of SINR intervals can be determined according to the determined SINR scale. Each SINR interval corresponding to one channel estimation neural network model. For example, a SINR scale table S is determined, and the SINR scale is divided into the first number of SINR intervals Si based on the SINR scale, for example, a determined dB value. When the first number is n, i=1, 2, ..., n. Each SINR interval Si has one channel estimation neural network model Mi corresponding to the SINR interval Si, where i= i=1, 2, ... , n.

As in the above embodiment, the SINR is calculated based on the received CSI-RS reference signal, and the SINR interval where the SINR is located is determined. The channel estimation neural network model corresponding to the determined SINR interval is determined based on the determined correspondence between SINR intervals and channel estimation neural network models. The determined channel estimation neural network model is used to estimate the channel.

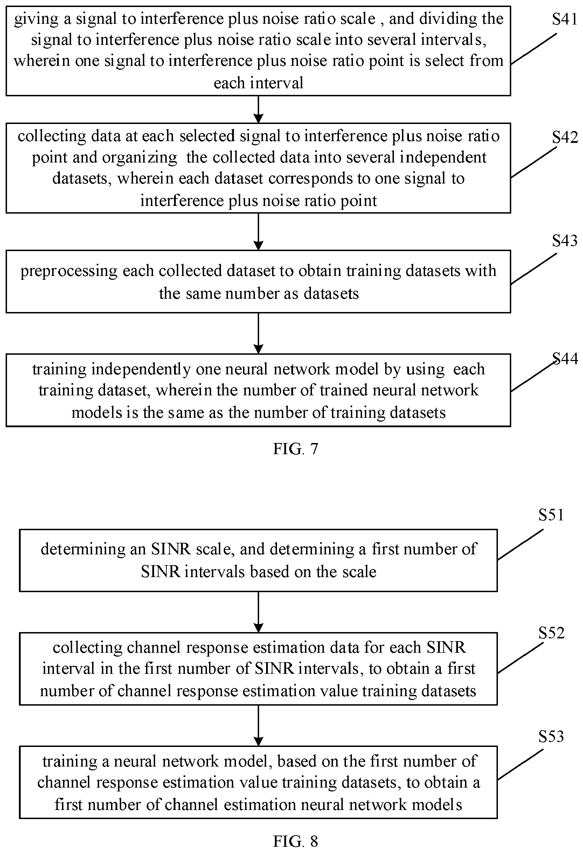

The process of the above embodiment of the present disclosure can refer to FIG. 7. FIG. 7 is a flowchart illustrating a method of determining a neural network model in a method for a channel estimation according to an exemplary embodiment. As illustrated in FIG. 7, the method may include the following steps S41 to S44.

At step S41, a signal to interference plus noise ratio scale is given, and is divided into several intervals. One signal to interference plus noise ratio point is select from each interval.

In some possible embodiments, the step S41 may include sub steps S411 and S412.

At sub step S411, a SINR scale table S is given, and is divided into n intervals Si based on the dB value of the SINR, where i=1, 2, ..., n. Note: the given SINR scale table and a method for dividing intervals are the same as the built-in SINR scale table and a method for dividing intervals at the receiver.

At sub step 412, in each divided SINR interval Si (i=1, 2, ..., n), a signal to interference plus noise ratio point qi within the interval is selected, where i=1, 2, n. Each signal to interference plus noise ratio point qi corresponds to one SINR interval Si.

At step S42, data is collected at each selected signal to interference plus noise ratio point and the collected data is organized into several independent datasets. Each dataset corresponds to one signal to interference plus noise ratio point.

In some possible embodiments, the step S42 may include sub steps S421 and S422:

At sub step S421, a reception signal to interference plus noise ratio in a simulation or real environment is obtained, and data is collected when the reception signal to interference plus noise ratio is qi (where i=1, 2, ..., n). The collected data includes: a vector pi arranged by channel response estimation values at DMRS positions in K PRBs, and ideal channel response estimation values Hi for the K PRBs.

At sub step S422, the collected data is organized into n datasets. Each dataset Di corresponds to one signal to interference plus noise ratio point qi, where i=1, 2, ..., n. The dataset Di includes a vector pi arranged by channel response estimation values at the DMRS position in the K PRBs collected at the signal to interference plus noise ratio point qi, and the ideal channel response estimation values Hi for the K PRBs.

At step S43, each collected dataset is preprocessed to obtain training datasets with the same number as datasets.

In some possible embodiments, the step S43 may include sub steps S431 to S437.

At sub step S431, for the dataset Di, where i=1, 2, ..., n. The vector pi in Di is obtained, and elements in the vector pi is ranked according to time-frequency points where the DMRSs are located during collecting.

At sub step S432, a real parts and an imaginary part of the vector pi after adjusting the time-frequency position are separated to obtain pi re and pi im, respectively.

At sub step S433, two-dimensional interpolation is performed on the real part pi-re of the vector pi after adjusting the time-frequency position to obtain a real part hi-re of the rough channel response estimation value. A dimension of hi-re is the same as a dimension of the ideal channel response estimation values Hi for the K PRBs.

At sub step S434, two-dimensional interpolation is performed on the imaginary part pi-im of the vector pi after adjusting the time-frequency position to obtain an imaginary part hi-im of the rough channel response estimation value. The dimension of hi-im is the same as a dimension of the ideal channel response estimation values Hi for the K PRBs.

At sub step S435, the ideal channel response estimation values Hi for the K PRBs in Di are obtained, the real parts and the imaginary parts of the ideal channel response estimation values Hi are separated, to obtain: Hi re and Hi im.

At sub step S436, the preprocessed data is combined. hi-re is input data for training the neural network, Hi-re is a label corresponding to hi-re, and hi-re and Hi-re form one set of training data y1_ i. hi-im is input data for training the neural network, and Hi-im is a label corresponding to hi-im. hi im and Hi im form one set of training data y2_i. y1_i and y2_i are combined into the training dataset Zi.

At sub step S437, sub steps S431 to S436 are repeated to obtain n training datasets.

At step S44, one neural network model is train independently by using each training dataset, and the number of trained neural network models is the same as the number of training datasets.

In some possible embodiments, the step S44 may include sub steps S441 to S443.

At sub step S441, for the training dataset Zi, i=1, 2, ..., n, a neural network model Mi is obtained by training using Zi;

At sub step S442, with using the supervised learning method, a loss function is a mean square error, and the neural network model Mi is train by y1_i and y2_i in the training dataset Zi together, where hi-re in y1_i is the input data, and Hi-re is the label corresponding to hi-re; hi-im in y2_i is the input data, and Hi-im is the label corresponding to hi-im.

At sub step S443, sub steps S431 to S436 are repeated to obtain n neural network models.

The following embodiments will be further explained in combination with the accompanying drawings.

FIG. 8 is a flowchart illustrating a method for a channel estimation according to an exemplary embodiment. As illustrated in FIG. 8, the method for the channel estimation includes the following steps.

At step S51, an SINR scale is determined, and a first number of SINR intervals is determined based on the scale.

In an embodiment of the present disclosure, the first number of SINR intervals are determined based on the determined SINR scale. Each SINR point is further determined. The SINR point is configured to determine DMRS time-frequency positions for collecting data of channel response estimation values. For example, in each divided SINR interval $S_i$ (i=1, 2, ..., n), one SINR point $q_i$ is selected within the interval, where i=1, 2, ..., n. Each signal to interference plus noise ratio point $q_i$ corresponds to one SINR interval $S_i$.

At step S52, channel response estimation data for each SINR interval in the first number of SINR intervals is collected, to obtain a first number of channel response estimation value training datasets.

In an embodiment of the present disclosure, the reception SINR in a simulation environment or a real environment is received, and the channel response estimation data corresponding to the SINR interval is collected, in a case that the received SINR is $q_i$, based on the SINR point $q_i$ of each SINR interval. The collected data includes: a vector $p_i$ arranged by channel response estimation values at DMRS positions in K PRBs, and ideal channel response estimation values $H_i$ for the K PRBs.

The collected data is organized into n datasets $D_n$. Each dataset $D_i$ corresponds to one signal to interference plus noise ratio point $q_i$, where i=1, 2, ..., n. The dataset $D_i$ includes a vector $p_i$ arranged by channel response estimation values at the DMRS position in the K PRBs collected at the signal to interference plus noise ratio point $q_i$, and the ideal channel response estimation values $H_i$ for the K PRBs. For the dataset $D_i$, where i=1, 2, ..., n. The vector $p_i$ in $D_i$ is obtained, and elements in the vector $p_i$ is ranked according to time-frequency points where the DMRSs are located during collecting. A real parts and an imaginary part of the vector $p_i$ after adjusting the time-frequency position are separated to obtain $p_i$ re and $p_i$ im, respectively. two-dimensional interpolation is performed on the real part $p_i$-re of the vector $p_i$ after adjusting the time-frequency position to obtain a real part $h_i$-re of the rough channel response estimation value. A dimension of $h_i$-re is the same as a dimension of the ideal channel response estimation values $H_i$ for the K PRBs. The two-dimensional interpolation is performed on the imaginary part $p_i$-im of the vector $p_i$ after adjusting the time-frequency position to obtain an imaginary part $h_i$-im of the rough channel response estimation value. The dimension of $h_i$-im is the same as a dimension of the ideal channel response estimation values $H_i$ for the K PRBs. The ideal channel response estimation values $H_i$ for the K PRBs in $D_i$ are obtained, the real parts and the imaginary parts of the ideal channel response estimation values $H_i$ are separated, to obtain: $H_i$ re and $H_i$ im. The preprocessed data is combined. $h_i$-re is input data for training the neural network, $H_i$-re is a label corresponding to $h_i$-re, and $h_i$-re and $H_i$-re form one set of training data $y1\_i$. $h_i$-im is input data for training the neural network, and $H_i$-im is a label corresponding to $h_i$-im. $h_i$ im and $H_i$ im form one set of training data $y2\_i$. $y1\_i$ and $y2\_i$ are combined into the training dataset $Z_i$. In a case that the first number is n, i=1, 2, ... , n.

At step S53, a neural network model is trained, based on the first number of channel response estimation value training datasets, to obtain a first number of channel estimation neural network models.

Based on the determined combination training data, i.e. the first number of channel response estimation value training datasets, the neural network model corresponding to each channel response estimation value training dataset is determined. The neural network model corresponding to each channel response estimation value training dataset is trained independently based on the channel response estimation value training dataset to obtain the first number of channel estimation neural network models.

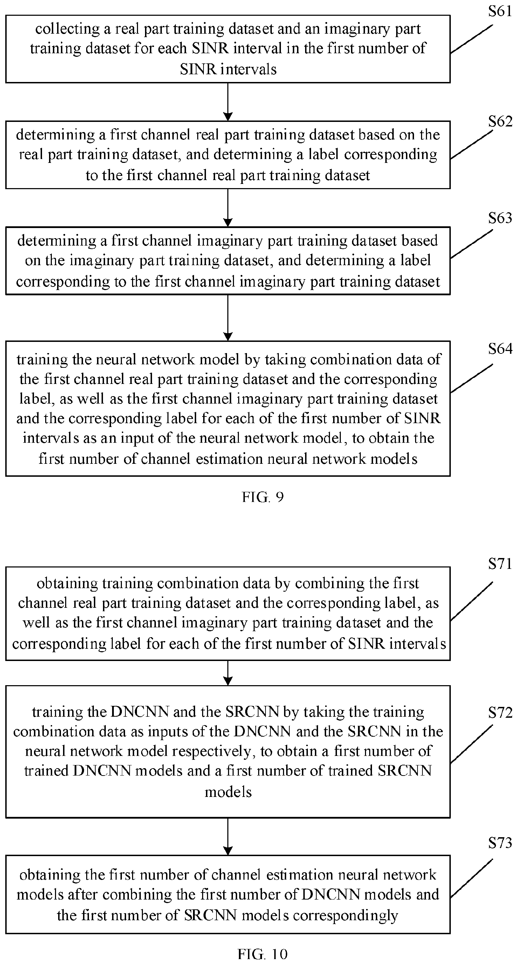

FIG. 9 is a flowchart illustrating a method for a channel estimation according to an exemplary embodiment. As illustrated in FIG. 9, the method for the channel estimation includes the following steps.

At step S61, a real part training dataset and an imaginary part training dataset for each SINR interval in the first number of SINR intervals are collected.

At step S62, a first channel real part training dataset is determined based on the real part training data set, and a label corresponding to the first channel real part training dataset is determined.

At step S63, a first channel imaginary part training dataset is determined based on the imaginary part training dataset, and a label corresponding to the first channel imaginary part training dataset is determined.

At step S64, the neural network model is trained by taking combination data of the first channel real part training dataset and the corresponding label, as well as the first channel imaginary part training dataset and the corresponding label for each of the first number of SINR intervals as an input of the neural network model, to obtain the first number of channel estimation neural network models.

In an embodiment of the present disclosure, the real part training dataset and the imaginary part training dataset for each channel response estimation value training dataset are determined based on the first number of channel response estimation value training datasets. The label corresponding to the first channel real part training dataset as well as the label corresponding to the first channel imaginary part training dataset in each channel response estimation value training dataset are determined. The neural network model is independently trained based on each channel response estimation value training dataset, that is, a dataset Zi is trained and the neural network model Mi is trained. With using a supervised learning method, the loss function is the mean squared error. The neural network model Mi is train by y1_i and y2_i in the training dataset Zi together, where hi-re in y1_i is the input data, and Hi-re is the label corresponding to hi-re; hi-im in y2_i is the input data, and Hi-im is the label corresponding to hi-im. The first number of channel estimation neural network models are obtained.

In an embodiment of the present disclosure, the neural network model may be composed of two parts in series, one is a super resolution convolution neural network (SRCNN), and the other is a denoising convolution neural network (DNCNN).

FIG. 10 is a flowchart illustrating a method for a channel estimation according to an exemplary embodiment. As illustrated in FIG. 10, the method for the channel estimation includes the following steps.

At step S71, training combination data is obtained by combining the first channel real part training dataset and the corresponding label, as well as the first channel imaginary part training dataset and the corresponding label for each of the first number of SINR intervals.

At step S72, the DNCNN and the SRCNN are trained by taking the training combination data as inputs of the DNCNN and the SRCNN in the neural network model respectively, to obtain a first number of trained DNCNN models and a first number of trained SRCNN models.

At step S72, the first number of channel estimation neural network models are obtained after combining the first number of DNCNN models and the first number of SRCNN models correspondingly.

In an embodiment of the present disclosure, the DNCNN and the SRCNN can be trained respectively. The DNCNN can be trained with taking each training combination data in the first quantity used as an input for the DNCNN in the neural network model. The SRCNN can be trained with taking the training combination data as an input for the SRCNN in the neural network model. The trained DNCNN model and the trained SRCNN model are obtained. The DNCNN model and the SRCNN model are combined in series to determine the channel estimation neural network model, so as to obtain the first number of channel estimation neural network models.

In an embodiment of the present disclosure, training the DNCNN and the SRCNN respectively can save time and improve a training speed for the model.

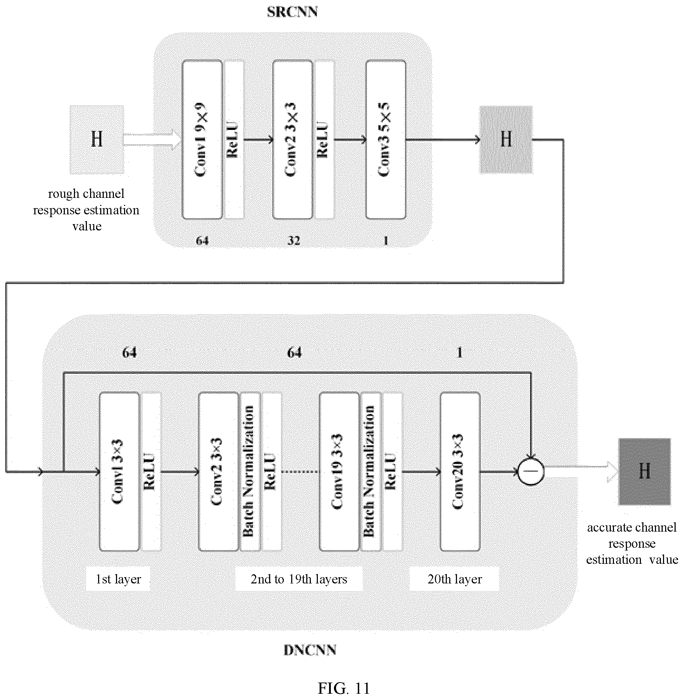

In the present disclosure, it should be noted that FIG. 11 is a schematic diagram illustrating a specific structure of a neural network model in a method for a channel estimation according to an exemplary embodiment. As illustrated in FIG. 11, the SRCNN is divided into three layers. A first layer is configured to capture a large block of feature in a fuzzy channel impulse response. A convolution neural network uses $n_1$ filters. A spatial parameter of each filter is $c \times f_1 \times f_1$, where $c$ is a number of channels in an input layer. $W^{[1]}$ represents all parameters for performing $n_1$ convolution operations. $B^{[1]}$ represents an output obtained after each convolution, with an offset added in a form of broadcasting. An activation function of this layer uses ReLu.

$$F_1(Y) = \text{Re } Lu(W^{[1]} * Y + B^{[1]})$$

A second layer is configured for spatial conversion, with mapping a space where a fuzzy channel feature is located to a space where a feature estimated by the ideal channel are located. A convolution neural network operation uses $n_2$ filters. A spatial parameter of each filter is $n_1 \times f_2 \times f_2$, where $n_1$ is the number of channels extracted through the first layer. $W^{[2]}$ represents all parameters for performing $n_2$ convolution operations. $B^{[2]}$ represented an output obtained after each convolution, with an offset added in a form of broadcasting. A role of neural network in this layer is to act as a nonlinear mapping from a $n_1$ dimension vector to a $n_2$ dimension vector. It may be considered to set the spatial parameter of the filter as $f_2 = 1$. An activation function of this layer uses ReLu.

$$F_2(Y) = \text{Re } Lu(W^{[2]} * F_1(Y) + B^{[2]})$$

A third layer is configured to reconstruct the accurately estimated channel characteristics, to reconstruct an accurate channel impulse response. The convolution neural network operation, uses $c$ filters (corresponding to a number of channels in the input layer). A spatial parameter of each filter is $n_2 \times f_3 \times f_3$, where $n_2$ is a number of channels after linear mapping. $W^{[3]}$ represents all parameters for performing c convolution operations. $B^{[3]}$ represents an output obtained after each convolution, with an offset added in a form of broadcasting.

$$F_3(Y) = W^{[3]} * F_2(Y) + B^{[3]}$$

Parameter configuration table 1 is provided as follows.

Table 1

| $f_1 = 9$ | $f_2 = 3$ | $f_3 = 5$ |
|---|---|---|
| $n_1 = 64$ | $n_2 = 32$ | $c = 1$ |
| *Padding =' same'* | *Padding =' same'* | *Padding =' same'* |

It can be understood that each element in the above table exists independently, and these elements are illustratively listed in the same table, but it does not mean that all elements in the table should exist simultaneously as shown in the table. A value of each element is independent of any other element values in the table. Therefore, those skilled in this art can understand that the value of each element in the table is an independent embodiment.

The following describes a structure of the neural network DNCNN.

A time-frequency domain structure of a channel impulse response may be obtained a time-frequency domain structure Y that is consistent with a target super resolution dimension through the SRCNN. The DNCNN has a total of 20 layers and may be divided into three parts.

A first part consists of one layer, and an convolution neural network operation uses $n_1$ filters. A spatial parameter of each filter is $c \times f_1 \times f_1$, where c is a number of channels in an input layer. $W^{[1]}$ represents all parameters for performing $n_1$ convolution operations. $B^{[1]}$ represents an output obtained after each convolution, with an offset added in a form of broadcasting. An activation function of this layer uses ReLu.

$$F_1(Y) = \mathrm{Re}\, Lu\left(W^{[1]} * Y + B^{[1]}\right)$$

A second part consists of 18 layers, and the convolution neural network operation uses $n_1$ filters. A spatial parameter of each filter is $n_{i-1} \times f_i \times f_i$, where $n_{i-1}$ is a number of channels in the previous layer. $W^{[i]}$ represents all parameters for performing $n_1$ convolution operations. $B^{[i]}$ represents an output obtained after each convolution, with an offset added in a form of broadcasting. To prevent overfitting and accelerate a training speed, before using an activation function, each layer may first pass through a Batch Normalization layer and then use a ReLu activation function.

$$F_i(Y) = \mathrm{Re}\, Lu\left(BN\left(W^{[i]} * F_{i-1}(Y) + B^{[i]}\right)\right)$$

$$i = 2, \ldots \ldots, 19$$

A third part is a residual network layer, which first performs convolution and uses c filters (corresponding to a number of channels in an input layer), and a spatial parameter of each filter is $n_{19} \times f_{20} \times f_{20}$. $W^{[20]}$ represents all parameters for performing c convolution operations. $B^{[20]}$ represented an output obtained after each convolution, with an offset added in a form of broadcasting. A residual is then calculated and the estimation value of the DNCNN is subtracted from Y initially input into the neural network. The DNCNN is configured to estimate a noise between an input time-frequency domain structure Y and an ideal time-frequency domain structure. After an image is processed by the SRCNN, it may save a lot of waiting time during actual training.

$$F_{20}(Y) = Y - \left(W^{[20]} * F_{19}(Y) + B^{[20]}\right)$$

Parameter configuration table 2 is provided as follows.

Table 2

| 1 st layer | 2nd to 19th layers | 20th layer |
|---|---|---|
| $f_1 = 3$ | $f_{2-19} = 3$ | $f_{20} = 3$ |
| $n_1 = 64$ | $n_{2-19} = 64$ | $c = 1$ |
| *Padding =' same'* | *Padding =' same'* | *Padding =' same'* |

It can be understood that each element in the above table exists independently, and these elements are illustratively listed in the same table, but it does not mean that all elements in the table should exist simultaneously as shown in the table. A value of each element is independent of any other element values in the table. Therefore, those skilled in this art can understand that the value of each element in the table is an independent embodiment.

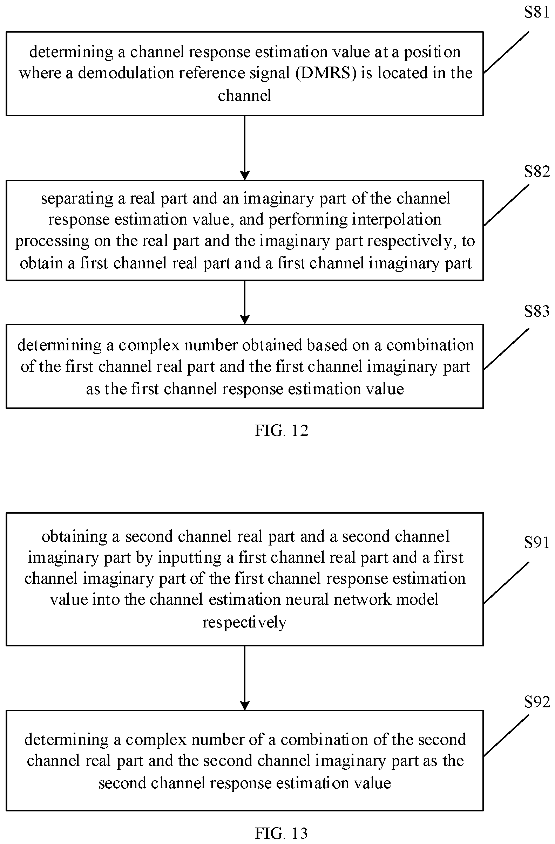

FIG. 12 is a flowchart illustrating a method for a channel estimation according to an exemplary embodiment. As illustrated in FIG. 12, the method for the channel estimation includes the following steps.

At step S81, a channel response estimation value at a position where a demodulation reference signal (DMRS) is located in the channel is determined.

At step S82, a real part and an imaginary part of the channel response estimation value are separated, and interpolation processing is performed on the real part and the imaginary part respectively, to obtain a first channel real part and a first channel imaginary part.

At step S83, a complex number obtained based on a combination of the first channel real part and the first channel imaginary part is determined as the first channel response estimation value

In an embodiment of the present disclosure, the channel response estimation values at all DMRS positions in the K PRBs are obtained to construct a vector p. A real part and an imaginary part of the vector p are separated to obtain p-re and p-im, respectively. Two-dimensional interpolation is performed on a real part and an imaginary parts of the vector formed by the channel response estimation values at the DMRS positions, to obtain real parts and imaginary parts of rough channel response estimation values. The two-dimensional interpolation is performed on the real part p-re of the vector p to obtain a real part h-re of the rough channel response estimation value. The two-dimensional interpolation is performed on the imaginary part p-im of the vector p to obtain an imaginary part h-im of the rough channel response estimation value. The first channel response estimate value is determined by combining the real part h-re of the rough channel response estimate value with the imaginary part h-im of the rough channel response estimate value.

FIG. 13 is a flowchart illustrating a method for a channel estimation according to an exemplary embodiment. As illustrated in FIG. 13, the method for the channel estimation includes the following steps.

At step S91, a second channel real part and a second channel imaginary part are obtained by inputting a first channel real part and a first channel imaginary part of the first channel response estimation value into the channel estimation neural network model respectively.

At step S92, a complex number of a combination of the second channel real part and the second channel imaginary part is determined as the second channel response estimation value.

In an embodiment of the present disclosure, taking the signal to interference plus noise ratio (SINR) of the received signal belonging to the interval Si as an example, the neural network model Mi is selected to estimate the channel. A real part H-re of the estimated accurate channel response value is obtained by passing h-ret through the neural network model Mi. An imaginary part H-im of the estimated accurate channel response value is obtained by passing h-im through the neural network model Mi. H-re and H-im are combined into: $H=H-re+H-im\times j$, where H is the accurate channel response estimation value, that is, the second channel response estimation value.

Based on the same conception, an apparatus for a channel estimation is further provided in embodiments of the present disclosure.

It may be understood that the apparatus for the channel estimation provided in embodiments of the present disclosure includes hardware structures and/or software modules that perform corresponding functions in order to achieve the above functions. In combination with modules and algorithm steps of examples described in embodiments of the present disclosure, the embodiments of the present disclosure may be implemented in the form of a hardware or a combination of a hardware and a computer software. Whether a certain function is executed by a hardware or a computer software driving a hardware depends on specific applications and design constraints of the technical solution. Those skilled in the art may adopt different methods for each specific application to implement the described functions, but such implementation should not be considered as beyond the scope of the technical solutions in embodiments of the present disclosure.

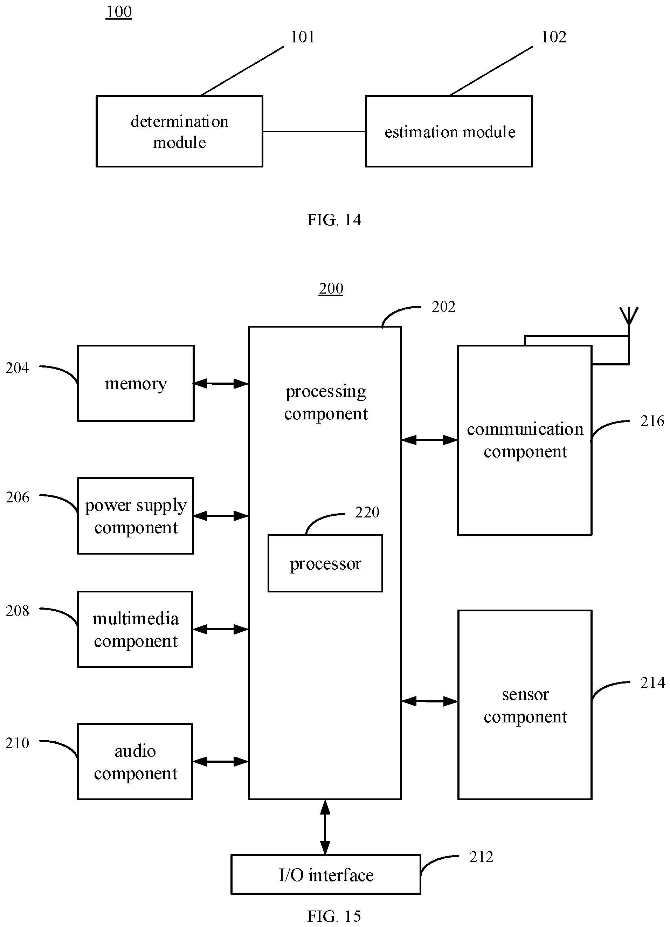

FIG. 14 is a block diagram illustrating an apparatus 100 for a channel estimation according to an exemplary embodiment. As illustrated in FIG. 14, the apparatus 100 for the channel estimation includes a determination module 101 and an estimation module 102.

The determination module 101 is configured to determine a channel estimation neural network model corresponding to a signal to interference plus noise ratio (SINR), and determine a first channel response estimation value of a channel. The estimation module 102 is configured to obtain a second channel response estimation value of the channel by inputting the first channel response estimation value into the channel estimation neural network model. The determination module 101 is configured to determine the second channel response estimation value as an estimation value of the channel.

In an embodiment of the present disclosure, the determination module 101 is configured to: determine a correspondence between SINR intervals and channel estimation neural network models, and determining an SINR interval where the SINR is located; determine a channel estimation neural network model corresponding to the SINR interval where the SINR is located based on the correspondence.

In an embodiment of the present disclosure, the determination module 101 is configured to: determine an SINR scale, and determine a first number of SINR intervals based on the scale; collect channel response estimation data for each SINR interval in the first number of SINR intervals, to obtain a first number of channel response estimation value training datasets; train a neural network model, based on the first number of channel response estimation value training datasets, to obtain a first number of channel estimation neural network models.

In an embodiment of the present disclosure, the determination module 101 is configured to: collect a real part training dataset and an imaginary part training dataset for each SINR interval in the first number of SINR intervals; determine a first channel real part training dataset based on the real part training dataset, and determine a label corresponding to the first channel real part training dataset; determine a first channel imaginary part training dataset based on the imaginary part training data set, and determine a label corresponding to the first channel imaginary part training dataset; and train the neural network model by taking combination data of the first channel real part training dataset and the corresponding label, as well as the first channel imaginary part training dataset and the corresponding label for each of the first number of SINR intervals as an input of the neural network model, to obtain the first number of channel estimation neural network models.

In an implementation, the neural network model includes a denoising convolution neural network (DNCNN) and a super resolution convolution neural network (SRCNN);

The determination module 101 is configured to: obtain training combination data by combining the first channel real part training dataset and the corresponding label, as well as the first channel imaginary part training dataset and the corresponding label for each of the first number of SINR intervals; train the DNCNN and the SRCNN by taking the training combination data as inputs of the DNCNN and the SRCNN in the neural network model respectively, to obtain a first number of trained DNCNN models and a first number of trained SRCNN models; and obtain the first number of channel estimation neural network models after combining the first number of DNCNN models and the first number of SRCNN models correspondingly.

In an embodiment of the present disclosure, the determination module 101 is configured to: determine a channel response estimation value at a position where a demodulation reference signal (DMRS) is located in the channel; separate a real part and an imaginary part of the channel response estimation value, and perform interpolation processing on the real part and the imaginary part respectively, to obtain a first channel real part and a first channel imaginary part; and determine a complex number obtained based on a combination of the first channel real part and the first channel imaginary part as the first channel response estimation value.

In an embodiment of the present disclosure, the determination module 101 is configured to: obtain a second channel real part and a second channel imaginary part by inputting a first channel real part and a first channel imaginary part of the first channel response estimation value into the channel estimation neural network model respectively; and determine a complex number of a combination of the second channel real part and the second channel imaginary part as the second channel response estimation value.

With regard to the apparatus in the above embodiments, the specific way in which each module performs the operation has been described in the embodiments of the method and will not be repeated here.

FIG. 15 is a block diagram illustrating a device 200 for a channel estimation according to an exemplary embodiment. For example, the device 200 may be a mobile phone, a computer, a digital broadcasting terminal, a messaging device, a game console, a tablet device, a medical equipment, a fitness equipment, a personal digital assistant, etc.

As illustrated in FIG. 15, the device 200 may include one or more components: a processing component 202, a memory 204, a power supply component 206, a multimedia component 208, an audio component 210, an input/output (I/O) interface 212, a sensor component 214, and a communication component 216.

The processing component 202 generally controls the whole operation of the device 200, such as operations related to display, phone call, data communication, camera operation and recording operation. The processing component 202 may include one or more processors 220 to perform instructions, to complete all or part of steps of the above method. In addition, the processing component 202 may include one or more modules for the convenience of interaction between the processing component 202 and other components. For example, the processing component 202 may include a multimedia module for the convenience of interaction between the multimedia component 208 and the processing component 202.

The memory 204 is configured to store all types of data to support the operation of the device 200. Examples of the data include the instructions of any applications or methods operated on the device 200, contact data, phone book data, messages, pictures, videos, etc. The memory 204 may be implemented by any type of volatile or non-volatile storage devices or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 206 may provide power supply for all components of the device 200. The power supply component 206 may include a power supply management system, one or more power supplies, and other units related to generating, managing and distributing power for the device 200.

The multimedia component 208 includes an output interface screen provided between the device 200 and the user. In some embodiments, the screen may include a liquid crystal display (LCD) and a touch panel (TP). When the screen includes a touch panel, the screen may be implemented as a touch screen to receive input signals from the user. The touch panel includes one or more touch sensors to sense touch, slide and gestures on the touch panel. The touch sensor may not only sense the boundary of touch or slide action, but also detect the duration and pressure related to the touch or slide operation. In some embodiments, the multimedia component 208 includes a front camera and/or a rear camera. When the device 200 is in an operation mode, such as a shooting mode or a video mode, the front camera or the rear camera may receive external multimedia data. Each front camera and rear camera may be a fixed optical lens system or an optical lens system with a focal length and an optical zoom capacity.

The audio component 210 is configured as an output and/or input signal. For example, the audio component 210 includes a microphone (MIC). When the device 200 is in operation mode, such as call mode, record mode, and speech recognition mode, the microphone is configured to receive external audio signals. The audio signals received may be further stored in the memory 204 or sent via the communication component 216. In some embodiments, the audio component 210 further includes a speaker configured to output an audio signal.

The I/O interface 212 provides an interface for the processing component 202 and the peripheral interface module, and the peripheral interface module may be a keyboard, a click wheel, a button, etc. The buttons may include but not limited to a home button, a volume button, a start button and a lock button.

The sensor component 214 includes one or more sensors, configured to provide various aspects of status assessment for the device 200. For example, the sensor component 214 may detect the on/off state of the device 200 and the relative positioning of the component. For example, the component is a display and a keypad of the device 200. The sensor component 214 may further detect the location change of the device 200 or one component of the device 200, the presence or absence of contact between the user and the device 200, the orientation or acceleration/deceleration of the device 200, and the temperature change of the device 200. The sensor component 214 may include a proximity sensor, which is configured to detect the existence of the objects nearby without any physical contact. The sensor component 214 may further include a light sensor such as CMOS or CCD image sensor, which is configured to use in imaging applications. In some embodiments, the sensor component 214 may further include an acceleration transducer, a gyroscope sensor, a magnetic sensor, a pressure sensor or a temperature sensor.

The communication component 216 is configured for the convenience of wire or wireless communication between the device 200 and other devices. The device 200 may access wireless networks based on a communication standard, such as Wi-Fi, 2G or 3G, or their combination. In an exemplary embodiment, the communication component 216 receives broadcast signals or broadcast-related information from an external broadcast management system via a broadcast channel. In an exemplary embodiment, the communication component 216 further includes a near field communication (NFC) module to facilitate short-range communication. For example, an NFC module may be implemented based on a radio frequency identification (RFID) technology, an infrared data association (IRDA) technology, an ultra-wideband (UWB) technology, Bluetooth (BT) technology and other technologies.

In an exemplary embodiment, the device 200 may be implemented by one or more application specific integrated circuits(ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method.

In an exemplary embodiment, a non-transitory computer readable storage medium is further provided which includes instructions, such as the memory 204 including instructions. The instructions may be executed by the processor 220 of the device 200 to complete the above methods. For example, the non-transitory computer-readable storage medium may be a ROM, a random-access memory (RAM), a CD-ROM, a magnetic tape, a floppy disk, an optical data storage device, etc.

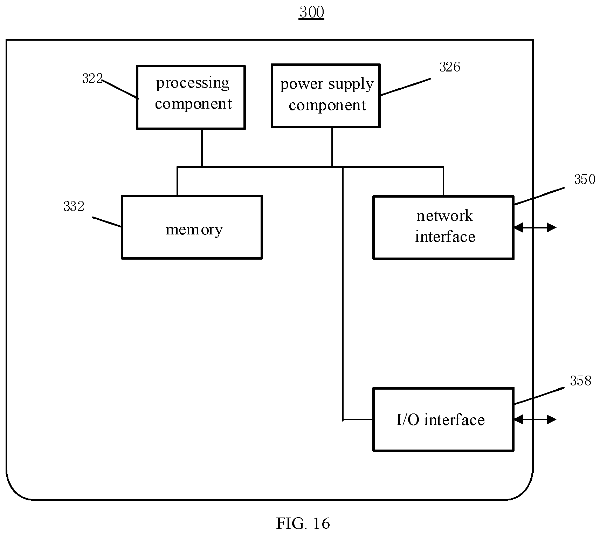

FIG. 16 is a block diagram illustrating a device 300 for a channel estimation according to an exemplary embodiment. For example, the device 300 may be provided as a network device, and for example, a base station. As illustrated in FIG. 16, the device 300 includes a processing component 322, which further includes one or more processors, and memory resources represented by a memory 332, which are configured to store instructions executable by the processing component 322, and for example, an application. The application stored in the memory 332 may include one or more modules each of which corresponds to a set of instructions. In addition, the processing component 322 is configured to execute instructions, to perform the above method.

The device 300 may further include one power supply component 326 configured to execute power management of the device 300, and one wired or wireless network interface 450 configured to connect the device 300 to a network, and one input/output(I/O) interface 458. The device 300 may operate an operating system stored in the memory 332, for example, Windows ServerTM, Mac OS XTM, UnixTM, LinuxTM, FreeBSDTM.

In an exemplary embodiment, a non-transitory computer-readable storage medium including instructions is further provided, for example, the memory 332 including instructions. The instructions may be executed by the processing component 322 of the device 300 to complete the above methods. For example, the non-transitory computer-readable storage medium may be a ROM, a random-access memory (RAM), a CD-ROM, a magnetic tape, a floppy disk, an optical data storage device, etc.

It may be further understood that "a plurality of" in the present disclosure means two or above, which is similar to other quantifiers. "and/or", describes the relationship of the association objects, indicating that there may exist three relationships, for example, A and/or B, may represent: any of existing A only, existing both A and B, or existing B only. The character "j" generally means the contextual object is a kind of "or" relationship. The singular forms "a", "the" and "said are also intended to include plural forms, unless the context clearly indicates otherwise.

It should be further understood that, although the terms "first", "second", "third", etc. may be configured to describe various information, such information shall not be limited to these terms. These terms are only used to distinguish the same type of information, rather than indicate a particular order or importance degree. In fact, "first", "second" and other similar descriptions may be used interchangeably. For example, subject to the scope of this present disclosure, first information may also be referred to as second information, and similarly, and second information may also be referred to as first information.

It may be further understood that, even though operations are described in the drawings in a particular order, it should not be understood as requiring that such operations be performed in the particular order shown or in sequential order, or that all illustrated operations be performed to obtain desirable results. In certain circumstances, multitasking and parallel processing may be advantageous.

After considering the specification and practicing the disclosure here, those skilled in the art will easily think of other implementations. The present application is intended to cover any variations, usages, or adaptive changes of the present disclosure. These variations, usages, or adaptive changes follow the general principles of the present disclosure and include common knowledge or conventional technical means in the technical field not disclosed by the present disclosure. The description and the embodiments are to be regarded as exemplary only, and the true scope and spirit of the present disclosure are given by the appended claims.

It should be understood that the present disclosure is not limited to the precise structure described above and shown in the drawings, and various modifications and changes may be made without departing from its scope. The scope of the present application is only limited by the appended claims. The scope of the present application is only limited by the appended claims.

**Claims**

1. A method for a channel estimation, comprising:

   determining a channel estimation neural network model corresponding to a signal to interference plus noise ratio (SINR), and determining a first channel response estimation value of a channel;
   obtaining a second channel response estimation value of the channel by inputting the first channel response estimation value into the channel estimation neural network model; and
   determining the second channel response estimation value as an estimation value of the channel.

2. The method according to claim 1, wherein determining the channel estimation neural network model corresponding to the signal to interference plus noise ratio (SINR) comprises:

   determining a correspondence between SINR intervals and channel estimation neural network models, and determining an SINR interval where the SINR is located; and
   determining a channel estimation neural network model corresponding to the SINR interval where the SINR is located based on the correspondence.

3. The method according to claim 2, wherein determining the correspondence between SINR intervals and channel estimation neural network models comprises:

   determining an SINR scale, and determining a first number of SINR intervals based on the scale;
   collecting channel response estimation data for each SINR interval in the first number of SINR intervals, to obtain a first number of channel response estimation value training datasets; and
   training a neural network model, based on the first number of channel response estimation value training datasets, to obtain a first number of channel estimation neural network models.

4. The method according to claim 3, wherein training the neural network model, based on the first number of channel response estimation value training datasets, to obtain the first number of channel estimation neural network models comprises:

collecting a real part training dataset and an imaginary part training dataset for each SINR interval in the first number of SINR intervals;
determining a first channel real part training dataset based on the real part training dataset, and determining a label corresponding to the first channel real part training dataset;
determining a first channel imaginary part training dataset based on the imaginary part training data set, and determining a label corresponding to the first channel imaginary part training dataset; and
training the neural network model by taking combination data of the first channel real part training dataset and the corresponding label, as well as the first channel imaginary part training dataset and the corresponding label for each of the first number of SINR intervals as an input of the neural network model, to obtain the first number of channel estimation neural network models.

5. The method according to claim 4, wherein the neural network model comprises a denoising convolution neural network (DNCNN) and a super resolution convolution neural network (SRCNN);
wherein training the neural network model by taking the combination data of the first channel real part training dataset and the corresponding label, as well as the first channel imaginary part training dataset and the corresponding label for each of the first number of SINR intervals as the input of the neural network model, to obtain the first number of channel estimation neural network models comprises:

obtaining training combination data by combining the first channel real part training dataset and the corresponding label, as well as the first channel imaginary part training dataset and the corresponding label for each of the first number of SINR intervals;
training the DNCNN and the SRCNN by taking the training combination data as inputs of the DNCNN and the SRCNN in the neural network model respectively, to obtain a first number of trained DNCNN models and a first number of trained SRCNN models; and
obtaining the first number of channel estimation neural network models after combining the first number of DNCNN models and the first number of SRCNN models correspondingly.

6. The method according to claim 1, wherein determining the first channel response estimation value of the channel comprises:

determining a channel response estimation value at a position where a demodulation reference signal (DMRS) is located in the channel;
separating a real part and an imaginary part of the channel response estimation value, and performing interpolation processing on the real part and the imaginary part respectively, to obtain a first channel real part and a first channel imaginary part; and
determining a complex number obtained based on a combination of the first channel real part and the first channel imaginary part as the first channel response estimation value.

7. The method according to claim 1 or 6, wherein obtaining the second channel response estimation value of the channel by inputting the first channel response estimation value into the channel estimation neural network model comprises:

obtaining a second channel real part and a second channel imaginary part by inputting a first channel real part and a first channel imaginary part of the first channel response estimation value into the channel estimation neural network model respectively; and
determining a complex number of a combination of the second channel real part and the second channel imaginary part as the second channel response estimation value.

8. An apparatus for a channel estimation, comprising:

a determination module, configured to determine a channel estimation neural network model corresponding to a signal to interference plus noise ratio (SINR), and determine a first channel response estimation value of a channel; and
an estimation module, configured to obtain a second channel response estimation value of the channel by inputting the first channel response estimation value into the channel estimation neural network model;
wherein the determination module is configured to determine the second channel response estimation value as an estimation value of the channel.

9. A device for a channel estimation, comprising:

a processor; and
a memory for storing instructions executable by the processor;
wherein the processor is configured to perform the method for the channel estimation according to any one of claims 1 to 7.

10. A non-transitory computer-readable storage medium, wherein, when instructions in the storage medium are executed by a processor of a mobile terminal, the mobile terminal is caused to perform the method for the channel estimation according to any one of claims 1 to 7.

DMRS

FIG. 1

DMRS                    CSI-RS

FIG. 2

signal processing module

| signal processing module | | | | |
|---|---|---|---|---|
| receiving a signal | calculating SINR by peeling off a CSI-RS signal | selecting a neural network model based on SINR | estimating the channel by using a neural network | performing the subsequent signal processing |

Neural network training module

| collecting data under different SINR | grouping data into a plurality of datasets | preprocess ing a training dataset | configuring a neural network training optimizer | training neural network | repeatedly training a plurality of neural networks |
|---|---|---|---|---|---|

signal processing module

configure reference signal

transmitter

receiver

FIG. 3

determining a channel estimation neural network model corresponding to an SINR, and determining a first channel response estimation value of a channel — S11

obtaining a second channel response estimation value of the channel by inputting the first channel response estimation value into the channel estimation neural network model — S12

determining the second channel response estimation value as an estimation value of the channel — S13

FIG. 4

S21

calculating an SINR of a received signal based on a reference signal CSI-RS in the received signal

S22

building in an SINR scale, and dividing the SINR scale into several intervals; in response to a reception SINR belonging to one of the intervals, selecting a neural network model corresponding to the interval to estimate the channel

S23

providing a single channel estimation as a density of K PRBs, and obtaining a vector formed by channel response estimate values at DMRS positions in the K PRBs; separating a real part and an imaginary part of the vector

S24

performing two-dimensional interpolation on a real part and an imaginary parts of the vector formed by the channel response estimation values at the DMRS positions, to obtain real parts and imaginary parts of rough channel response estimation values

S25

passing the real part of the rough channel response estimation value through the neural network model to estimate a real part of the accurate channel response; and passing the imaginary part of the rough channel response estimation value through the neural network model to estimate an imaginary part of the accurate channel response

S26

combining the real part of the accurate channel response and the imaginary part of the accurate channel response both estimated based on the neural network model into an accurate channel response estimate value, to complete the channel estimation for the K PRBs

FIG. 5

S31

determining a correspondence between SINR intervals and channel estimation neural network models, and determining an SINR interval where the SINR is located

S32

determining a channel estimation neural network model corresponding to the SINR interval where the SINR is located based on the correspondence

FIG. 6

giving a signal to interference plus noise ratio scale , and dividing the signal to interference plus noise ratio scale into several intervals, wherein one signal to interference plus noise ratio point is select from each interval — S41

collecting data at each selected signal to interference plus noise ratio point and organizing the collected data into several independent datasets, wherein each dataset corresponds to one signal to interference plus noise ratio point — S42

preprocessing each collected dataset to obtain training datasets with the same number as datasets — S43

training independently one neural network model by using each training dataset, wherein the number of trained neural network models is the same as the number of training datasets — S44

FIG. 7

determining an SINR scale, and determining a first number of SINR intervals based on the scale — S51

collecting channel response estimation data for each SINR interval in the first number of SINR intervals, to obtain a first number of channel response estimation value training datasets — S52

training a neural network model, based on the first number of channel response estimation value training datasets, to obtain a first number of channel estimation neural network models — S53

FIG. 8

collecting a real part training dataset and an imaginary part training dataset for each SINR interval in the first number of SINR intervals

S61

determining a first channel real part training dataset based on the real part training dataset, and determining a label corresponding to the first channel real part training dataset

S62

determining a first channel imaginary part training dataset based on the imaginary part training dataset, and determining a label corresponding to the first channel imaginary part training dataset

S63

training the neural network model by taking combination data of the first channel real part training dataset and the corresponding label, as well as the first channel imaginary part training dataset and the corresponding label for each of the first number of SINR intervals as an input of the neural network model, to obtain the first number of channel estimation neural network models

S64

FIG. 9

obtaining training combination data by combining the first channel real part training dataset and the corresponding label, as well as the first channel imaginary part training dataset and the corresponding label for each of the first number of SINR intervals

S71

training the DNCNN and the SRCNN by taking the training combination data as inputs of the DNCNN and the SRCNN in the neural network model respectively, to obtain a first number of trained DNCNN models and a first number of trained SRCNN models

S72

obtaining the first number of channel estimation neural network models after combining the first number of DNCNN models and the first number of SRCNN models correspondingly

S73

FIG. 10

SRCNN

rough channel
response estimation
value

accurate channel
response
estimation value

DNCNN

FIG. 11

determining a channel response estimation value at a position where a demodulation reference signal (DMRS) is located in the channel

S81

separating a real part and an imaginary part of the channel response estimation value, and performing interpolation processing on the real part and the imaginary part respectively, to obtain a first channel real part and a first channel imaginary part

S82

determining a complex number obtained based on a combination of the first channel real part and the first channel imaginary part as the first channel response estimation value

S83

FIG. 12

obtaining a second channel real part and a second channel imaginary part by inputting a first channel real part and a first channel imaginary part of the first channel response estimation value into the channel estimation neural network model respectively

S91

determining a complex number of a combination of the second channel real part and the second channel imaginary part as the second channel response estimation value

S92

FIG. 13

100

101

102

determination module

estimation module

FIG. 14

200

202

204

memory

processing component

216

communication component

206

power supply component

220

processor

208

multimedia component

210

audio component

214

sensor component

212

I/O interface

FIG. 15

FIG. 16

## INTERNATIONAL SEARCH REPORT

| International application No. |
| --- |
| **PCT/CN2021/101641** |

**A.    CLASSIFICATION OF SUBJECT MATTER**

H04L 25/02(2006.01)i

According to International Patent Classification (IPC) or to both national classification and IPC

**B.    FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNPAT, CNKI, WPI, EPODOC: 信道估计, 信干扰比, SINR, 神经网络, 模型, 区间, 训练, DNCNN, SRCNN, channel estimation, signal-to-interference ratio, neural network, model, interval, training

**C.    DOCUMENTS CONSIDERED TO BE RELEVANT**

| Category* | Citation of document, with indication, where appropriate, of the relevant passages | Relevant to claim No. |
| --- | --- | --- |
| X | CN 112737985 A (SOUTHEAST UNIVERSITY) 30 April 2021 (2021-04-30) claim 1, and description, paragraphs 36-44 | 1-10 |
| X | CN 110474663 A (GUANGZHOU UNIVERSITY) 19 November 2019 (2019-11-19) claims 1-3 | 1-10 |
| A | CN 111510402 A (XIDIAN UNIVERSITY) 07 August 2020 (2020-08-07) entire document | 1-10 |
| A | CN 107743103 A (BEIJING JIAOTONG UNIVERSITY) 27 February 2018 (2018-02-27) entire document | 1-10 |
| A | CN 112953862 A (HARBIN ENGINEERING UNIVERSITY) 11 June 2021 (2021-06-11) entire document | 1-10 |
| A | WO 2012113168 A1 (MONTAGE TECHNOLOGY SHANGHAI CO., LTD. et al.) 30 August 2012 (2012-08-30) entire document | 1-10 |

☐ Further documents are listed in the continuation of Box C.        ☑ See patent family annex.

| | |
| --- | --- |
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
| --- | --- |
| **16 February 2022** | **25 February 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/101641**

| Patent document cited in search report | | | Publication date (day/month/year) | Patent family member(s) | | | Publication date (day/month/year) |
|---|---|---|---|---|---|---|---|
| CN | 112737985 | A | 30 April 2021 | None | | | |
| CN | 110474663 | A | 19 November 2019 | None | | | |
| CN | 111510402 | A | 07 August 2020 | None | | | |
| CN | 107743103 | A | 27 February 2018 | None | | | |
| CN | 112953862 | A | 11 June 2021 | None | | | |
| WO | 2012113168 | A1 | 30 August 2012 | US | 2013129023 | A1 | 23 May 2013 |
| | | | | CN | 102651723 | A | 29 August 2012 |

Form PCT/ISA/210 (patent family annex) (January 2015)